(19)

Europäisches Patentamt
European Patent Office
Office européen des brevets

(11) **EP 2 352 290 B1**

(12) **EUROPEAN PATENT SPECIFICATION**

(45) Date of publication and mention
of the grant of the patent:
**21.11.2012 Bulletin 2012/47**

(51) Int Cl.:
***H04N 7/15*** *(2006.01)*

(21) Application number: **09178096.5**

(22) Date of filing: **04.12.2009**

(54) **Method and apparatus for matching audio and video signals during a videoconference**

Verfahren und Vorrichtung zur Abgleichung von Audio- und Videosignalen während einer Videokonferenz

Méthode et dispositif pour aligner des signaux audio et vidéo pendant une vidéoconférence

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**03.08.2011 Bulletin 2011/31**

(73) Proprietor: **Swisscom AG**
**3050 Bern (CH)**

(72) Inventor: **Van Kommer, Robert**
**1752 Villars-sur-Glâne (CH)**

(74) Representative: **P&TS SA (AG, Ltd.)**
**Av. J.-J. Rousseau 4**
**P.O. Box 2848**
**2001 Neuchâtel (CH)**

(56) References cited:
**EP-A1- 1 784 020      EP-A1- 1 906 707**
**EP-A2- 1 763 241      WO-A1-2008/143561**
**US-B1- 6 624 841**

## Description

Field of the invention

The present application relates to teleconference and telepresence communication services.

The present application also relates to methods for improving the spatial perception of a reconstructed audio signal during a teleconference.

The present application further relates to a method and system for achieving a nearly-perfect illusion of human presence in a room, where both audio and video are truly representing that person or group of person located elsewhere on a network.

The present application further relates to manipulation of audio signals during a teleconference, in order to match the position and size of displayed elements with corresponding audio signals.

Description of related art

In multi-channel audio systems, one goal is usually to reproduce the spatial composition of the originally recorded signal, i.e. the origin of individual audio source, such as the location of a trumpet within an orchestra. Several loudspeaker set-ups may be used for creating different spatial impressions. For example, the very widespread two-channel stereo set-ups can recreate auditory events on a line between the two loudspeakers. The so-called "amplitude-panning" is often used for in stereo sound system, where the amplitude of the signal associated to one audio source is distributed between the two loudspeakers, depending on the position of the audio source with respect to the loudspeakers. That is, an audio source coming from the far-left with respect to the listening position will be mainly reproduced by the left loudspeaker, whereas an audio source in front of the listening position will be reproduced with identical amplitude (level) by both loudspeakers.

A more natural spatial impression can be created by using more loudspeakers around the listener. Common multi-channel loudspeaker set-ups for the residential consumer market include the 5.1, and 7.1 standards. Professional and special systems, especially in theatres and sound installations, also include loudspeakers at different heights.

In common conventional multi-channel audio set-ups, the audio signal is tailored during recording or mixing to one specific loudspeaker configuration. For example, the sound engineer will assume during recording that the listener will sit at a specific location, called the sweet spot, between the loudspeakers, and that he wants to have the same audio experience as the one he would have at some distance in front of an orchestra for example.

A precise spatial audio composition is important for recorded music, but is even more crucial when images as displayed together with the audio, such as in movies and during videoconference, and every time when the position of the audio sources is displayed on a screen. In fact, any mismatch between the position of an element on display and the apparent origin of the corresponding audio signal is very disturbing and detrimental to the realism of multimedia experience. This problem can usually be solved in motion picture and other recorded video signals by manually re-mixing the audio signal, in order to align each audio source with the corresponding position on display.

However, in a video conferencing system, the image and audio signals captured on one side of a communication network are transmitted to a remote station and reproduced in real time or with minimal delay. In this case, there is no time for a manual mixing of audio signals.

Therefore, since remixing is not possible during a videoconference, a precise positioning and orientation of the microphones, loudspeakers and other components of the system is critical for ensuring a correct alignment of the images with the audio landscape. This is especially crucial in so-called telepresence systems where the goal is to have a nearly live face-to-face meeting experience over a network and to create the feeling of being in person at a virtual table with participants from remote locations.

For those reasons, the use of telepresence and videoconferencing solutions is still mostly limited to enterprise level corporate offices; those systems usually require a specially designed room with state-of-the-art video cameras, displays, sound systems and processors, thus resulting in high installation costs. Those various components are often provided by one single supplier and need to be arranged in a precise way prescribed by this supplier. For example, the location and orientation of the microphones, loudspeakers and camera is usually fixed and optimized so as to create a more realistic spatial reproduction and to improve the coherence between audio and image data.

The high installation costs deter many casual users, such as small offices and residential users, from installing such a telepresence system. Therefore, many casual users rely only on very low end videoconference systems based on a webcam, a personal computer system, a compression software (often as part of a chat program) and broadband Internet connectivity. Although such a setup allows for simultaneous transmission of sound and video, the experience is sometimes disappointing and does not provide the same level of immersion than more professional solutions. For example, the sound in personal video teleconference systems is usually monochannel, with no control of audio directionality.

WO-A1-2009/042530 describes an apparatus using various audio mixers arranged for predicting and modifying the audio directionality and to adapt it to the current or next active speaker.

WO-A2-02/079792 describes another video conferencing apparatus using an array of microphones and a stationary camera to automatically locate a speaker and to manipulate the video image so as to produce the effect of a pan tilt zoom.

US-B1-6593956 discloses a video conferencing system using an audio source locator for processing audio and image signals to determine a direction and location of the audio source. This direction and location information is used to frame a proper camera shot which includes the audio source.

US-A1-2006/0104458 describes a videoconferencing system in which directional information of the audio signal is determined on the sending side and transmitted to a remote side; this directional information is used on the remote side to translate the apparent origin of the reproduced audio signal. Thus, voice from participants on the left side of a display is directed through audio on the left side of the display, providing a spatially more realistic audio during a conference call. This is only adapted to videoconferences where only one speaker speaks at each instant. If there are fixed audio sources (for example a loudspeaker diffusing music in the background, or other voices), their position is shifted after each translation of the origin of the audio signal, resulting in an unnatural reproduction of sounds.

US5335011 describes a teleconferencing system having a video camera and a microphone array for generating a monochannel audio signal and a direction signal indicating the direction or zone from which the sound originated. At a second station, a loudspeaker control device is provided for selecting a virtual location on a displayed video image depending on the direction signal, and for generating stereo sound from the monochannel audio signal, which stereo sound emanates from the virtual location on the displayed video image.

According to one aspect, there is a need for an improved teleconference system which is much more affordable than high-end solutions in dedicated rooms, while nevertheless providing the impression of being fully present at a remote location, and providing an excellent audio and visual experience to the participants.

According to another aspect, there is also a need for a teleconference system which is less cumbersome and expensive to install afterwards in an existing room, for example in an existing meeting room or in a living room.

According to another aspect, there is a further need for a system and method of video teleconferencing in which the spatial coherence between the audio signal and the image signals is improved.

Brief summary of the invention

According to one aspect of the invention, these aims are achieved among other by means of a method for matching audio and video signals during a videoconference between participants at a plurality of stations, comprising the steps of:

transmitting over a telecommunication network the video and audio signals from a first station to a second, remote station;

manipulating the audio signal in said second station, so as to give the impression that the voice of each speaking participant originates from the virtual location of this participant on or around a display;

further comprising manipulating said audio signal in said second station, so as to dynamically adapt the width of the audio signal to the video signal.

This method provides among other the advantage of a very natural spatial restitution of audio signal; not only does the reproduced voice originates from the virtual location of the speaking participant (i.e., his location on or around the image), but the audio width is automatically adapted when the image is magnified, for example when the camera is zoomed on the recording side, or when the image magnification factor is changed on the receiving side. In this case, when the displayed size of a speaking participant is changed, the width of the audio signal and the virtual location of the audio source corresponding to this participant are automatically adapted to give the impression of being closer to the audio source.

The adaptation of the audio signal in the second station may for example comprise adjusting the amplitude of the audio signal produced by different loudspeakers at said second station. Adaptation may additionally or alternatively include adjusting delays between audio signals produced by different loudspeakers. Adaptation may additionally or alternatively include adapting the amplitude of audio signals which are common between several channels. Adaptation may additionally or alternatively include manipulation of echoes.

The adaptation of the audio image produced by the loudspeakers at the receiving end creates the illusion of an audio source placed anywhere in a three dimensional space. The audio image is thus adapted by modifying the sound source's azimuth (the angle between the source and the sagittal plane), its elevation (the angle between the source and horizontal plane), and even the distance between the listener and the virtual audio source. The distance to the virtual audio source can be manipulated at the receiving side for example by manipulating echoes, for example by manipulating the ratio between direct sound and echoed sound.

The method may also be used for locating people and audio sources outside of the reproduced image, and for producing a sound which apparently originates from a virtual point outside of the display. This is useful for widening the audio landscape and giving the feeling of a room virtually filled with speaking participants, of which only a part are seen on the display. For example, this may be used for organising "soccer parties" where two groups of people at two different locations may virtually join during a videoconference and producing an audio cloudscape corresponding to a larger virtual crowd near the TV set, with participants and virtual participants from both locations.

The virtual location of the speaking participant in a two or preferably three dimensional space is computed at the station of this participant, or at least in part at the receiving remote station. This position may be transmitted between the two stations.

The localisation is preferably based on video images and, or alternatively, on audio signals. In a preferred embodiment, a plurality of microphones, for example two or three microphones, are used for capturing a multichannel audio signal. A plurality of cameras, for example two cameras, are also used for capturing a plurality of video signals. The location of the speaking person can be determined at any moment based on information retrieved by the set of microphones and/or based on the plurality of video streams. Processing simultaneously based on both audio and video information further helps in locating precisely and with less ambiguity each audio source.

If the position and width of each audio source is automatically computed in real time, based on the video and audio signals themselves, a precise knowledge of the position and type of cameras, microphones, loudspeakers etc used in each station is less critical; the position of the audio source and on display of at least one element are automatically aligned based on the audio and video signals themselves. Therefore, in order to reduce the installation costs, each station of the videoconference system is preferably built mainly around standard, of-the-shelves components which are already readily available in many living rooms. This method and system are thus particularly well adapted to residential users. In one example, a station may be built around a TV set as display and an existing audio installation, comprising an amplifier and a set of multichannel loudspeakers at various places in the room. One or several microphones are freely arranged by the user around the TV set, as well as cameras, such as webcams. At least some of the microphones may be integrated in some of the webcams. An equipment that integrates in a single box an image and audio processing means and a broadband Internet access card interconnects those various components, and makes the audio processing that are necessary for aligning the location and width of the audio signal to the video image. The processing means can also perform image processing functions, such as foreground/background extraction, identification of image features, magnification, image shifting, and synthetic image generation for example.

The plurality of microphones are preferably freely arranged by the user around the TV set roughly at a same height in order to improve the azimuthal localisation. The set of cameras preferably comprises one camera above the display of the TV set, and another camera under this TV set, in order to capture a stereo video image and improve height localisation. The two cameras may be for example ordinary webcams freely arranged by the user. Other arrangements of the cameras are possible, including cameras left and right of the TV set, although this would be less useful for parallax compensation, or arrangements with three, four or even more than four cameras, resulting in smaller hidden zones, but in a more expensive setting.

In one embodiment, a single synthetic image is dynamically created based on a plurality of video streams captured by the cameras. The pointing direction of the virtual camera corresponding to this virtual, synthetic view may be different from the direction of each real camera, and used for example for compensating the parallax between each camera and the position of the remote participant on the display. This may be used in order to give a feeling of "eye-to-eye contact" between each participant, and is especially efficient if two cameras above and under the TV set are used.

Other image processing operation may be executed, especially if a virtual image from a virtual camera is generated. For example, the image background in the video may be replaced by a previously recorded background; a disordered room may be virtually cleaned by playing a previously captured, proper background. New elements, such as new furniture, may be introduced in the image. Even the participants, or their clothes, may be virtually modified or replaced.

According to one aspect, the system does not only determine the location of one speaking participant at one end, but also the position of the listener at the other end, preferably in three dimensions. This can be used for adapting the position of the audio sweet spot on the receiving side.

Speaker recognition algorithms and/or face recognition algorithms may be used for identifying and/or authenticating participant. The verified identity may be used in a computer speech dialogue and/or displayed on the display. For example, the system may comprise a speech generator that address an identified person by his name and give him instructions or recommendations. This identity may also be transmitted to the other station during a conference call, and superimposed on the reproduced image to help the other party in identifying each participant.

In a similar way, known face and expression recognition algorithms may be used, as well as audio processing, for detecting the location of the active speaking participant at each moment. Gesture recognition algorithms can be used for entering commands for the videoconference system; for example, a user can command a zoom or a particular audio effect just by moving his hands or his arms in a predefined way.

Since the type, number and position of the microphones, loudspeakers, cameras and displays assembled by different user is likely to differ, a calibration can be performed in order to retrieve and store parameters of the installation. Part of the calibration may be performed by entering data on a form displayed on the TV set by a calibration program. Additional calibration parameters are measured, using for example the set of microphones, loudspeakers and cameras that compose the installation, as well as, optionally, their position and orientation. This calibration process may also comprise a step where requests are displayed or spoken by the system, inviting the user to speak, move and/or indicating the quality of the perceived audio and video signals. The speakers may be asked to wear easy to identify targets which can be used by an image processing software for determining their position and computing the position and orientation of the cameras.

The result of the calibration may be used in addition to the information in the audio and video signals for matching displayed elements with the virtual location and width of corresponding audio sources. Those parameters can also be used for determining and adjusting the sweet spot.

The calibration parameters of a station can be used locally by the station in order to improve the audio and video recording and the audio and video restitution. Those parameters can also be transmitted to another remote participant to a videoconference, in order to match the restitution parameters on one side with the recording parameters of the other side. For example, the calibration parameters may indicate that one participant has only one monaural microphone, and that this microphone is not exactly in the middle of the expected audio axis. In this case, a conversion of the audio signals can be performed, the nature and importance of the correction being independent from the information in the currently transmitted audio and video signals.

Brief Description of the Drawings

The invention will be better understood with the aid of the description of an embodiment given by way of example and illustrated by the figures, in which:

Fig. 1 shows an example of station mainly built around conventional audio and video equipments.

Figure 2 shows a system comprising a first (here incomplete) station, a second incomplete station and a network for interconnecting the two stations.

Figures 3A and 3B schematically illustrate how the audio signal is adapted to the location of a speaker moving on the display.

Figures 4A and 4B schematically illustrate how the width of the audio signal is adapted depending on the displayed size of a speaker.

Figures 5A and 5B schematically illustrate how the width and location of the audio signal is adapted depending on the magnification factor of a speaker.

Detailed Description of possible embodiments of the Invention

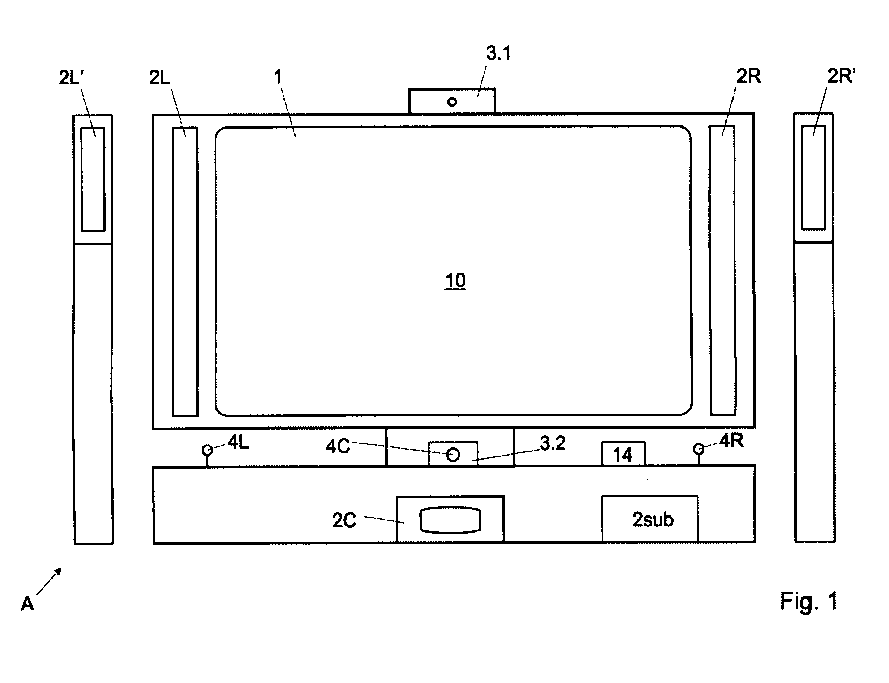

Figure 1 illustrates a possible setting for a station used for the telepresence and videoconference method of the invention. In this example, the station is mainly built around audio and video equipments which are already available in many households, and which are often arranged by their owners in a free way in the living room for example. The Figure illustrates a system comprising a flat-panel TV set 1 having a display 10, one left loudspeaker 2L and one right loudspeaker 2R. External loudspeaker 2L' and 2R' may also be used and connected to the TV through an additional audio amplifier (not shown) or using the audio amplifier integrated in the TV set 1. In this example, the set of loudspeakers 2 further comprises a central loudspeaker 2C and a subwoofer 2Sub; other multi-channel arrangements, including 5.1, 6.1, 7.1 etc audio surround systems may be used.

The station of Figure 1 further comprises a set of microphones 4, here one left microphone 4L, one central microphone 4C and one right microphone 4R. All microphones are here arranged by the user roughly at a same vertical height in order to improve the azimuthal localization of the audio source. Again, other arrangements of microphones comprising any number of microphones may be used. In addition, microphone arrays may also be used, as well as beamform technology for localizing audio sources and/or for removing unexpected audio signals from some directions. Microphone arrays are especially useful for determining the speaker location using software executed on the audio capture side of the telecommunication network 6.

Cameras 3.1 and 3.2, for example conventional webcams, are provided above and under the display 10 for capturing video images of the participant from various directions. The use of two cameras is useful for providing a three dimensional, or at least stereo, capture of the scene. Other number of cameras, for example one single camera, or more than two cameras, may also be used.

The station of Figure 1 further includes one equipment 14 which integrates in a single housing an image and audio processing system and a broadband Internet access card for connecting the station to the Internet. The image and audio processing systems are built around fast image and audio processors with processing software. A plurality of interfaces are provided connecting the equipment to the TV set (for example through HDMI or DVI connectors), to the microphones 4L, 4C and 4R, to the cameras 3.1 and 3.2 and to the amplifier (not shown). The equipment 14 further comprises a semi-permanent memory for storing calibration parameters of the station, among others.

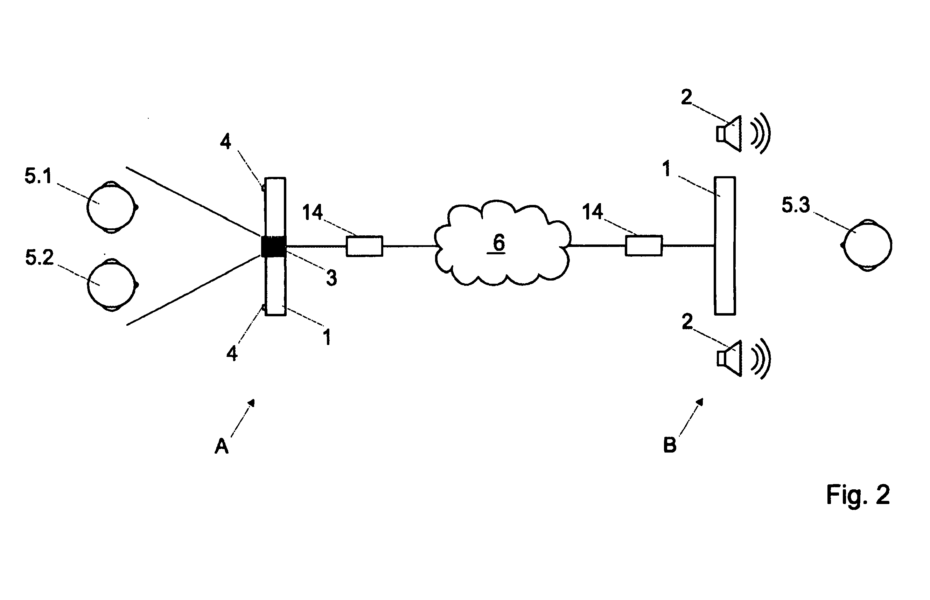

Figure 2 illustrates schematically a system for establishing a videoconference between participants 5 at two remote stations connected over a network 6, for example the Internet. Each station comprises a display, for example as part of a TV set 1. The first station on the left part of the Figure further comprises microphones 4 and a camera 3 for capturing audio and video signals of a scene with two participants 5.1 and 5.2. Those signals are processed by the equipment 14 of the station, transmitted over the Internet to a remote equipment 14 in the other remote station represented on the right side of the Figure. The remote equipment 14 further processes the audio and video signals in order to ensure spatial coincidence of the audio and visual signals, preferably taking into account prerecorded or current calibration parameters of the receiving station. The processed signals are then reproduced by the display 10 and by the set of loudspeakers 2, to give the recipient 5.3 the impression of being close to the other participants 5.1 and 5.2.

Although Figure 2 illustrates for the sake of simplicity a system with one station A on the left side having only recording components 3, 4, and another station B on the right side having only reproduction components 1, 2, the one skilled in the art will understand that most stations will have reproduction and capture means, like the station of Figure 1, thus ensuring a true bi- or multi-directional exchange between all stations during a videoconference.

According to one aspect, the location of one speaking participant (or of any other audio source) at one side is implicitly or explicitly determined, and used for aligning the location of the virtual audio source on the remote side with the position of the corresponding element on display. For example, if the voice from a participant in the middle of the display seems to originate from a position shifted on the left side, the audio processing means of the receiving station 14 automatically adjust this position, in order to align the apparent origin of the audio signal with the displayed position.

In one embodiment, the alignment of the audio landscape with the displayed image can comprise a step of identifying one or several image features corresponding to audio sources in the image, for example speakers or other foreground elements, and aligning the virtual origin of the sound signals produced by those audio sources with their position in or around the image. This alignment can be performed at calibration of the station, at the beginning of the video conference, and possibly adapted during the video-conference.

The detection of one active audio source can be based on the video signals itself, for example by identifying objects or persons on the image who are currently speaking, for example the position of one single person on the image, or the position of the person whose lips are currently moving. This determination may also, or additionally, be based on audio processing, for example by determining the amplitude and phase of audio signals received by different microphones.

In a preferred embodiment, the displacement of the audio landscape is made not only along a horizontal axis (azimuth), but also along the vertical axis, in order to align the vertical position of audio sources with their image. In a further embodiment, the distance to this speaker is also estimated, in order to locate this speaker in a three-dimensional space. In this case, a bi-dimensional or three-dimensional map of audio sources may be computed based on the captured audio and video signals, where the location of one or several audio sources is computed and adjusted in real time.

The shifting of the audio landscape can be generated for example by changing the balance, i.e., the amplitude of audio signals emitted by different loudspeakers on each side of the audio source, by changing delays between audio signals generated by those different loudspeakers, and/or by changing the amount of common audio material shared between several loudspeakers.

According to one aspect, the alignment of the audio image with the video signal is also based on parameters of the station A, B previously determined during a calibration of the station. For example, if the microphones 4 or cameras 3 are not centred with the display 10, or not oriented in the expected direction, a correction of the error caused by the miscentering or misorientation can be determined and stored as parameter of the station. Therefore, a correction of the balance is possible, even without image processing and without alignment of audio sources with visual features, just by knowing that one station usually generates set an unbalanced set audio signals that need correction.

In a similar way, the manipulation of the audio signals can also depend on predefined parameters of the receiving station, and takes into account the position of the loudspeakers in the room for example. The processing of audio and video signals between their capture and their reproduction on the other side thus depends on calibration parameters of both stations.

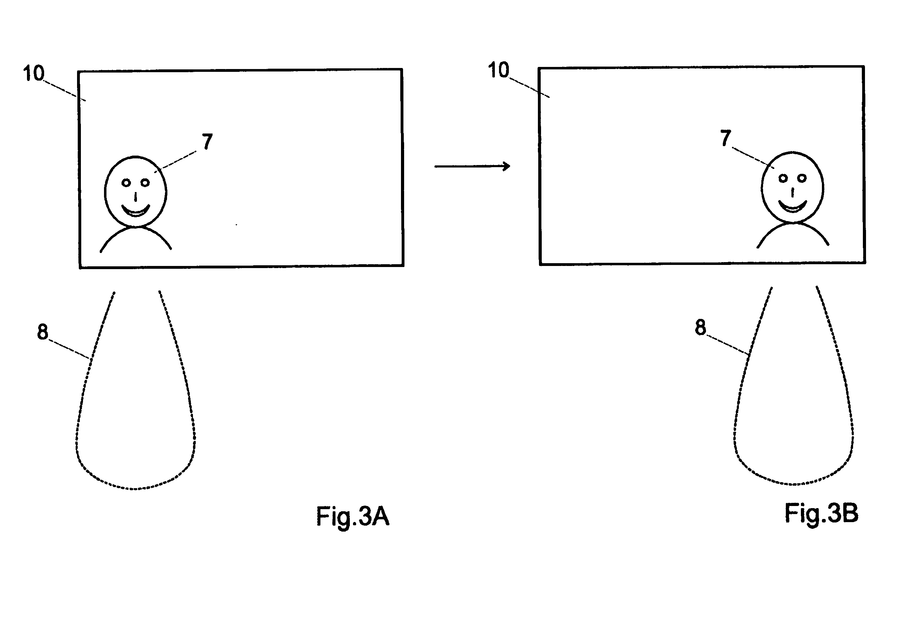

The alignment of the audio signals with the video image is made initially at the beginning of the video-conference session, but needs to be updated after some events, or continuously. For example, when the cameras on the capturing side A are translated or rotated in a panning movement, the position of one participant 7 moves from one side of the display 10 to the other side, as illustrated on Figures 3A and 3B. The same happens for example when the receiving user on side B enters a horizontal scrolling command to shift the display. In both cases, the displayed video image is shifted, but not the received audio signal. Therefore, the audio processing system in the receiving equipment 14 automatically manipulate the audio signals in order to shift or rotate the audio landscape, and to move the virtual location from which the reproduced audio signal apparently originates, as shown with the lobes 8.

The detection of movements can be made on the sender side A, by monitoring camera displacements; in this case, the information about those displacements needs to be transmitted in real time to the recipient B over the network 6. A detection of movements can also be made on the receiving side B, by detecting scrolling commands entered by the user or automatically executed.

In one embodiment, image processing means are used for detecting displacements of the image. In this case, it is necessary to distinguish between displacements of the displayed image which need a corresponding translation or rotation of the audio landscape, from other displacements which don't need such a correction, or which only need a small correction to be done.

In fact, when the camera is moved, or when the receiving user scrolls the image, all elements of the image, including fixed and background image features, are usually shifted. Since the microphones don't follow this movement, the audio landscape is no more aligned with the image, and needs to be readapted.

On the other side, the shift of one visual feature 7 in the image can also result from a displacement of a person or object in front of a fixed camera, for example when a speakers moves in his living room. In this case, only one foreground image feature is displaced, but the background remains fixed. In this case, if the microphones on the sending side A are multichannel, there is theoretically no need to modify the audio manipulation settings on the receiving side; the microphones will automatically capture the displacement of the audio source, and produce a set of audio signals in which the position of this speaker is already shifted.

Images processing means in the receiving equipment thus preferably perform a foreground and background extraction in order to distinguish between displacements of foreground and background elements, and to detect whether a move concerns only foreground element, or also background elements. This foreground/background extraction process advantageously makes use of the two video signals from the different cameras, from which a distance to the foreground objects can be determined. Face and body recognition algorithms can also be used in order to improve the reliability with which people in the foreground are identified.

If the image processing means detect that the background is moved, the audio landscape is automatically and immediately adapted to follow this displacements. On the other side, if only one foreground feature is displaced (for example when one speakers moves), the manipulation settings on the receiving side are usually not adapted, since the microphones will already register this move. However, even in this second situation, an adaptation can also be made, for example when the audio is captured with a monochannel microphone, or in other situations when the arrangement of microphones is sub-optimal. In this case, the coherency of the image with the audio may be depreciated after a displacement of the speaker. Therefore, in one embodiment, the position of the audio sources is re-aligned continuously and/or after each displacement of an element in the displayed image, in order to match the audio landscape with the new image. Since the amplitude of the required correction is usually low, it can be made with a delay, and thus does not require very fast image processing means for detecting the new position of the audio sources on display.

In any case, when a displacement of the displayed image has been detected, the audio signals are manipulated on the receiving side B, to give the impression of a corresponding displacement of the virtual location of the audio source. Thus, the location of the speaker or audio source on the image always corresponds to the virtual location from which the corresponding audio signals seems to originate.

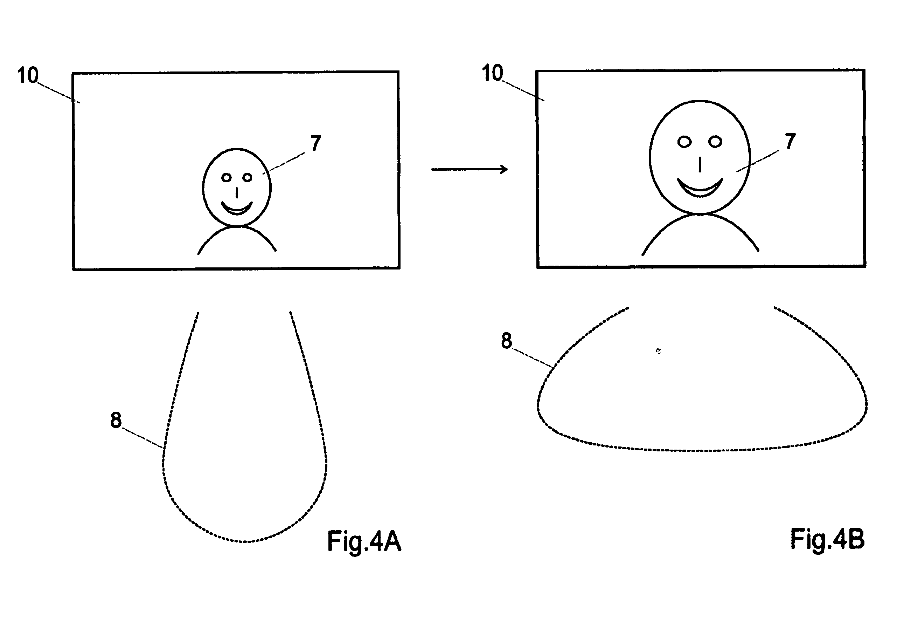

As illustrated on Figures 4A and 4B, the processing of audio signals further depends on the size of the audio source on the image. Between Figure 4A and Figure 4B, the size of the speaker 7 is increased, for example because the recipient on the remote side changed the image magnification. According to one aspect, the width of the audio signal is automatically adapted to this change, and wider on Figure 4B than on Figure 4A, thus giving the impression of being closer to the audio source. It is further possible to increase the amplitude (level) of the sound signal when the image is magnified.

As for translation of the image, magnification can be detected on the sending side, for example if there is a zoom with the cameras. This information needs to be transmitted to the recipient. In most situations, magnification will result from a zoom of the image displayed on the receiving side, and is thus detected on the receiving side by monitoring zoom commands entered by the user.

Image processing functions can also be used for detecting any magnification of image that needs a corresponding widening or narrowing of the audio landscape. As for translation of the image, the image processing means advantageously distinguish between situations where only one foreground element is magnified (for example when a speaking participant moves closer to the camera) from situation where the background is also changed (in case of zooming for example). In the first situation, there is probably no need to change the width of the audio signal, since the microphones will already record this displacement. Realignment may nevertheless be performed in order to compensate for microphone inaccuracies and in case of monochannel audio recording; the small correction which is required can be introduced after a delay.

In the second situation (zoom on display or camera), there is a need to change the width of the audio signal.

Widening of the audio signal preferably comprises an adaptation of the amplitude of audio signals produced by the various loudspeakers on the receiving side. For example, the amplitude of the audio signal generated by a central loudspeaker may be reduced while the amplitude generated by lateral loudspeakers is increased. In addition, delays between audio signals produced by different loudspeakers can be adjusted. It is also possible to adapt the amplitude of audio signals which are common between several channels; by removing common audio material, one gives the impression of more different audio channels, and of a more remote audio source.

In the case of stereo signals, widening of the stereo image can be achieved by manipulating the relationship of the side signal S and the centre signal C:

$$C = \frac{L + R}{2}; S = \frac{L - R}{2}$$

where L and R denote the left and right stereo signals, respectively.

A positive part of the side signal S is then fed into the left channel and a part with its phase inverted to the right channel.

Another method for widening a stereo signal is to add the left signal, slightly attenuated and phase inverted, into the right channel and vice-versa. A small delay or echoes can be added to the inverted signal before mixing it back in to the original for output, adding a slight reverberation to the effect.

If two microphones at the same location are used for recording a stereo signal, a mid-side microphone technique can be used to vary the width of the audio image.

Similar methods may be used for widening the audio representation (so as to give the impression of being close to the audio source) or narrowing this representation (as when one move away from this source). For example, echoes may be added for simulating the change of sound on its way from the audio source to the listener's ears. Other methods may be adapted for widening or narrowing multichannel audio signals, for example 5.1, 6.1 or 7.1 audio signals.

This adaptation of the audio width can be performed continuously and progressively when the size of an audio source is progressively modified on the display.

The adaptation of the audio width and location of the audio source can also result from zooming combined with a simultaneous translation or displacement. In this case, it may be necessary to adapt simultaneously the location and the width of the audio signal.

In one embodiment, the zooming and/or the translation result from a change of focus of the camera. For example, if the camera focus on hands of a speaker in the foreground, leaving the head of the speaker out of focus, the location and the width of the audio signal may be automatically adapted to emphasize audio signals coming from those hands, such as for example the noise of paper sheets or other objects manipulated by those hands. Conversely, an increase of the depth of field may be accompanied by a widening of the audio signal, in order to widen the audio landscape.

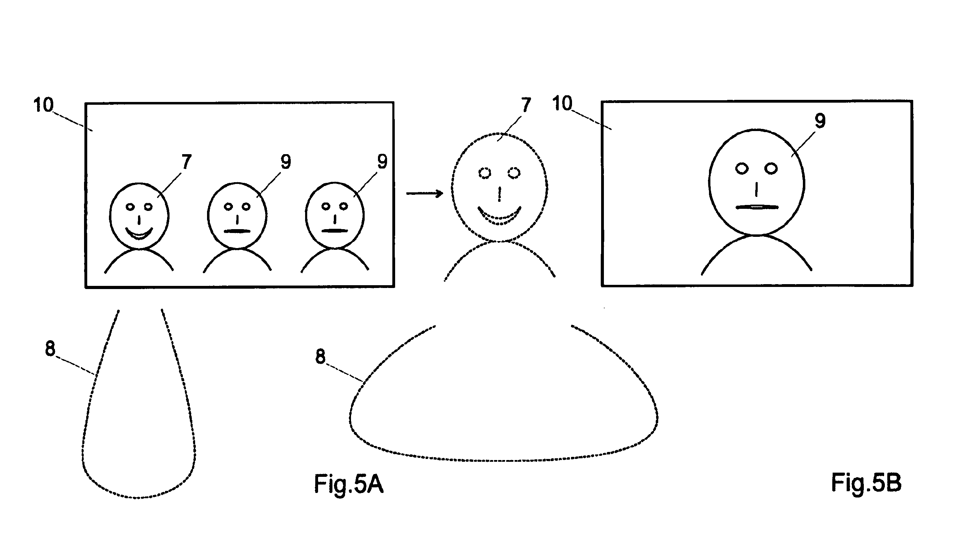

As illustrated on Figures 5A and 5B, increasing the magnification factor on the receiving side may result in one participant, for example the current speaker 7, to disappear from the magnified portion of image displayed on the TV set. In this case, the audio processor in equipment 14 of the recipient computes an audio location outside of the display 10, and processes the audio signal in order to match the location of this apparent audio source with this external location, thus ensuring spatial coherence between the audio and video signals. Again, the audio width may be adapted to the magnification.

The location of a participant on one side A can also be used on the same side A in order to improve the quality of the audio restitution, and to adapt it to the listener's position. We define the sweet spot of a spatial multi-channel audio signal as the location in which the spatial perception does not deviate significantly from the intended spatial perception for a standardized multi-channel speaker setup, and where the quality of restitution and spatial localisation is optimal. According to one aspect, the location and/or size of this sweet spot is manipulated (e.g. moving and/or widening) and adapted to the current location of the listener, or to the average location of a group of listeners, and follows displacement of this listener or group of listeners.

The position of the listener or listeners can correspond to the position of the currently speaking participant, determined as indicated previously. However, this position may be different, for example when one or several participants are listening but currently not speaking. In this case a separate determination of the location of the speaking participant (and other audio sources) and of the location of listening participants is made. The location of the listeners is preferably based on video processing, including head tracking, face recognition, and possibly on audio processing when those listeners are also speaking. In addition, a user may also indicate his position, for example by showing his position on his display. A default position can be stored as parameter in the listener's equipment, and used as a default value when a constant tracking of the listeners' position is not possible or not desired.

As already mentioned, the user's equipment 14 further comprises video processing means for processing the video image displayed on the TV set. If a plurality of video signals taken with different camera are recorded (for example one camera 3.1 on top of, and another camera 3.2 below the display 10), those video processing means can compute a virtual video image taken from a virtual location. In one example, this is used for compensating the parallax between each camera 3.1 , 3.2 and the display; in this case, the displayed image corresponds to the virtual video signal that would be taken by a virtual camera placed between the eyes of the image of the participant on the remote display, thus giving the impression of direct eye-to-eye contact.

A precise knowledge of the position and type of each camera is necessary for computing this virtual image. Since this position is not fixed (cameras may be freely arranged by the users around the TV set), this position, and possibly type, may be determined during a calibration step, and transmitted as parameter to the other party.

According to one aspect, the location and size of the participants, on which the audio manipulation is based, is determined on this virtual, synthetic image as processed by the video processing means and displayed on monitor 10. In this case, the determination of the location of the speaking participant needs to be done, or at least corrected, on the receiving side.

Computing a virtual synthetic video image, for example based on a plurality of video streams, allows further image processing, for example in order to translate or rotate in three dimensions the image of the displayed scene. For example, one participant, or a software program, can adjust the height, pointing direction and magnification factor of the virtual camera to the height and position of the participant on the other side, e.g. in order to adapt the framing to children, adults or to various number of participants. Again, the location and wideness of virtual audio sources is automatically adapted to those manipulations of the virtual image.

As the system is intended for use in residential apartments and in the living room, it may be convenient for example to replace a background of a tidy room by another background, for example a previously recorded background of the cleaned up room. Participants can also replace their clothes by virtual clothes that are more adapted to the other participants, and for example wear a virtual tie for business talks. A participant can also initiate a replacement of his appearance on the display of the remote participant by an avatar, for example a three-dimensional representation of a comic or real-world character whose movements are aligned with the movements. In all those situations, it is preferably that the participant whose image is captured will trigger image manipulation performed at least in part by the equipment on the remote side.

Since both stations are preferably built at least in part with conventional equipments which are already available and freely arranged in a room, calibration is important for determining the particular setting used by each user, as previously indicated. Parameters determined during this calibration comprise for example one or several among the followings:

- Number of microphones (for example one mono microphone, one stereo microphone, several microphones, etc)
- Position of the microphones in the room, preferably in three dimensions, or in a plane.
- Type of microphones (directionality, etc)
- Number of video camera
- Position of the cameras in the room, preferably in three dimensions, or in a plane.
- Type of camera
- Type of display (resolution etc)
- Number of audio channels, and encoding standard (for example 5.1 surround, etc)
- Position of the loudspeakers in the room, preferably in three dimensions, or in a plane.
- Type of loudspeakers (directionality, etc)
- Parameters of the room (reverberation etc)
- Expected position of the listener (sweet spot)
- Voice signature and face of each participant
- User preferences
- Etc

At least some of those parameters, for example parameters relevant for the audio and video capture, are preferably stored in a semi-permanent memory of equipment 14, transmitted as parameters to the other remote station, and used by the audio and video processing means in the remote equipment 14 during the process of matching size and location of the audio sources.

The calibration is preferably performed after installation of the system A or B, when one of the components is replaced or moved, or at request. Some calibration parameters may also be dynamically adapted by the equipment 14, for example during a videoconference, without any user's intervention. The calibration may comprise a first step of answering some questions displayed by the equipment 14 on the display 10, or spoken through the loudspeakers 2, and a second step of measure; the user may be requested to move, speak or otherwise act during this measuring step. During the calibration, the equipment can suggest improvements in order to improve the videoconference experience, for example suggest moving loudspeakers or other components, to switch on or off lights, to close a window, to add curtains and reduce reverberation, etc. Similar suggestions may also be automatically proposed and displayed or spoken during a videoconference.

The system settings determined during this calibration may change during actual use of the system. For example, one user may have his audio surround installation switched off, and rely on the stereo loudspeakers 2L, 2R of his TV set. He may also sit away from the expected sweet spot, or move during the conference. Those parameters changes are preferably tracked during the conference, and transmitted to the remote station when necessary; they can also replace the pre-stored calibration parameters when they seem to be permanent.

A user can also receive a videoconference call on another equipment, for example on his mobile phone, and start the videoconference with this equipment. The audio and video signals can then be transmitted during the videoconference to the station 1, for example when the called party moves to the living room and switch on his TV set in order to have an improved videoconference experience. Transmission of the audio and video signals from a mobile equipment to the system built around the TV set 1 and equipment 14 is preferably made though DLNA. This transfer may also involve replacing the mobile phone camera and microphone used during a first part of the videoconference by the more performing microphones and cameras in the living room. The transfer is preferably initiated or validated by the user, for example through a menu on his mobile phone, and the change of image and audio capture equipment during the call is transmitted to the other station in order to adapt the audio and video processing to those new parameters. In one embodiment, presence of the called party in front of his station B is automatically detected, for example with the cameras 3, and used for deciding if the TV set should be switched on and adapted to the TV channel corresponding to equipment 14.

There are situations where the audio set-up of the listener does not correspond to the set-up of microphones of the other party. For example, one listener with a stereo installation can receive a 5.1 surround audio signal. In other situations, the multichannel standard used during capture corresponds to the one used by the listener, but the position and arrangement of the loudspeakers are very different. In those situations, it is possible to convert one audio signal from one standard to another. For example, known apparatus and methods can be used for converting stereo audio into mono, 5.1 into stereo and even mono signals into stereo or other multi-channel audio signals.

## Claims

1. A method for matching audio and video signals during a videoconference between participants at a plurality of stations, comprising the steps of:

   receiving in a remote second station (B) the video and audio signals which are transmitted from a first station (A) to said second station (B) over a telecommunication network (6);
   manipulating the audio signal in said second station (B), so as to give the impression that a voice of each speaking participant originates from a virtual location of this participant on or around a display (10);
   further comprising manipulating said audio signal in said second station (B), so as to automatically and dynamically increase a width of the audio signal, when an image displayed is magnified or when a size of a speaking participant displayed is increased.

2. The method of claim 1, wherein the adaptation of the width of the audio signal comprises at least one of the followings:

   a) adjusting an amplitude of audio signals produced by different loudspeakers (2) at said second station (B); and/or
   b) adjusting delays between audio signals produced by different loudspeakers (2) at said second station (B); and/or
   c) adapting an amplitude of audio signals which are common between several channels at said second station (B).

3. The method of one of the claims 1 or 2, wherein said width is automatically adapted in case of change of focus of the video signal.

4. The method of one of the claims 1 to 3, wherein said width and said location are both automatically adapted when the image displayed at said second station (B) is magnified.

5. The method of claim 4, wherein said width and said location are both simultaneously adapted when the image displayed at said second station (B) is simultaneously translated and magnified.

6. The method of one of the claims 4 or 5, comprising:

   extracting foreground and background features of the video image;
   detecting changes in size and position change of foreground features;
   detecting changes in size and position change of background features;
   automatically adapting manipulation parameters of the audio signal when a change in size and position of background features has been detected, and maintaining the existing manipulation parameters when a change in size and position relates only to foreground features.

7. The method of claim 6, wherein a realignment of said manipulation parameters is performed continuously, or in response to a change in size or location of foreground features, in order to align those foreground features with corresponding audio sources.

8. The method of one of the claims 1 to 7, comprising determination of the azimuth and elevation of said speaking participant (7), and manipulating said audio signal in said second station (B), so as to dynamically adapt the azimuth, elevation and width of the audio image to the video signal.

9. The method of one of the claims 1 to 8, comprising determination of the distance to said speaking participant (7), and manipulating echoes in said audio signal in said second station (B), so as to dynamically adapt the distance between said virtual location and a listener at said second station.

10. The method of one of the claims 1 to 9, wherein the location of one speaking participant (7) outside of the reproduced video image is determined, and wherein the manipulation of the audio signal in said second station (B) is modified to give the impression that the voice of said speaking participant originates from a location outside of the image.

11. The method of one of the claims 1 to 10, further comprising determining the location of a listener at said second station (B), and modifying a sweet-spot of the audio signal reproduced at said second station (B) based on said location of the listener.

12. The method of one of the claims 1 to 11, further comprising identifying a listener at said second station based on an image and a voice of said listener, using speaker recognition algorithms and/or face recognition algorithms.

13. The method of one of the claims 1 to 12, wherein a plurality of cameras (3) are used at said first station (A) for simultaneously recording a plurality of video signals.

14. The method of claim 13, wherein said location is determined based on said plurality of video signals.

15. The method of one of claims 13 or 14, wherein the video signal reproduced at said second station (B) comprises a virtual video image processed from said plurality of video signals, so as to compensate for the parallax between said cameras (3) and a display (10) and to allow eye-to-eye contact between participants at both stations.

16. The method of claim 15, comprising the step of replacing a background in said virtual image by a predefined background.

17. The method of one of the claims 1 to 16, further comprising a calibration step during which parameters of said first station (A) which depend on the location of microphones (4) and/or loudspeakers (2) and/or cameras (3) are retrieved, stored and used for improving the coherence between the audio and video signals.

18. The method of claim 17, wherein at least some of said parameters are transmitted to said second station (B).

19. An apparatus comprising:

a TV set (1) as display;
a set of loudspeakers (2);
one or several microphones (4) freely disposable around said TV set;
one or several cameras (3) freely disposable around said TV set;
an equipment (14) integrating in a single housing image and audio processing means and a broadband Internet access card with a plurality of interfaces for said TV set, said cameras, said microphones and an amplifier;
wherein said processing means are arranged for obtaining a virtual location of an audio source and for manipulating audio signals so as to give the impression that an audio signal originates from said virtual location;
wherein said processing means are further arranged for manipulating said audio signal, so as to automatically and dynamically increase a width of the audio signal, when an image displayed is magnified or when a size of a speaking participant displayed is increased.

**Patentansprüche**

1. Ein Verfahren zum Abstimmen von Audio und Videosignalen während einer Videokonferenz zwischen Teilnehmern an einer Mehrzahl von Stationen, aufweisend die Schritte:

Empfangen in einer entfernt liegenden zweiten Station (B) die Video- und Audiosignale die von der ersten Station (A) zu der zweiten Station (B) über ein Telekommunikationsnetzwerk (6);
Manipulieren des Audiosignals in der zweiten Station (B), so dass der Eindruck gegeben wird, dass eine Stimme eines jeden sprechenden Teilnehmers von einem virtuellen Ort dieses Teilnehmers auf oder um einen Bildschirm (10) kommt;
weiter aufweisend Manipulieren des Audiosignals in der zweiten Station (B), so dass eine Breite des Audiosignals automatisch und dynamisch vergrössert wird, wenn ein dargestelltes Bild vergrössert wird oder wenn eine Grösse eines dargestellten sprechenden Teilnehmers vergrössert wird.

2. Das Verfahren nach Anspruch 1, wobei die Anpassung der Breite des Audiosignals mindestens eines der folgenden aufweist:

a) Anpassen einer Amplitude der durch verschiedene Lautsprecher (2) hergestellten Audiosignale in der zweiten Station (B); und/oder
b) Anpassen der Verzögerungen zwischen den durch verschiedene Lautsprecher (2) hergestellten Audiosignale in der zweiten Station (B); und/oder
c) Anpassen einer Amplitude der Audiosignale, die zwischen mehreren Kanälen gemeinsam sind, in der zweiten Station (B).

3. Das Verfahren nach einem der Ansprüche 1 oder 2, wobei die Breite im Falle einer Fokusänderung des Videosignals automatisch angepasst wird.

4. Das Verfahren eines der Ansprüche 1 bis 3, wobei die Breite und der Ort beide automatisch angepasst werden, wenn das dargestellte Bild an der zweiten Station (B) vergrössert wird.

5. Das Verfahren nach Anspruch 4, wobei die Breite und der Ort beide gleichzeitig angepasst werden, wenn das dargestellte Bild an der zweiten Station (B) gleichzeitig verschoben und vergrössert wird.

6. Das Verfahren nach einem der Ansprüche 4 oder 5, aufweisend:

Extrahieren von Vordergrund- und Hintergrundmerkmalen des Videobilds;
Detektieren von Änderungen der Grösse und von Ortsänderung von Vordergrundmerkmalen;
Detektieren von Änderungen der Grösse und von Ortsänderung von Hintergrundmerkmalen;
automatisches Anpassen von Manipulationsparametern des Audiosignals, wenn eine Änderung der Grösse und der Position der Hintergrundmerkmale detektiert wurde, und beibehalten der bestehenden Manipulationsparameter, wenn eine Änderung der Grösse und der Position sich nur auf die Vordergrundmerkmale bezieht.

7. Das Verfahren nach Anspruch 6, wobei eine Neuausrichtung der Manipulationsparameter laufend oder in Reaktion auf eine Änderung der Grösse oder des Orts der Vordergrundmerkmale durchgeführt wird, um diese Vordergrundmerkmale mit den entsprechenden Audioquellen auszurichten.

8. Das Verfahren nach einem der Ansprüche 1 bis 7, aufweisend Ermittlung des Azimuts und der Elevation des sprechenden Teilnehmers (7), und Manipulieren des Audiosignals in der zweiten Station (B), so dass derAzimuth, die Elevation und die Breite des Audiosignals dynamisch an das Videosignal angepasstwerden.

9. Das Verfahren nach einem der Ansprüche 1 bis 8, aufweisend Ermittlung des Abstands zum sprechenden Teilnehmer (7), und Manipulieren von Echos in dem Audiosignal in der zweiten Station (B), so dass die Distanz zwischen dem virtuellen Ort und einem Zuhörer der zweiten Station angepasst wird.

10. Das Verfahren nach einem der Ansprüche 1 bis 9, wobei der Ort eines
sprechenden Teilnehmers (7) ausserhalb des wiedergegebenen Videobilds bestimmt wird, und wobei die Manipulierung des Audiosignals in der zweiten Station (B) modifiziert wird, um den Eindruck zu geben, dass die Stimme des sprechenden Teilnehmers von einer Position ausserhalb des Bildes kommt.

11. Das Verfahren nach einem der Ansprüche 1 bis 10, weiterhin aufweisend
Ermitteln des Orts eines Zuhörers in der zweiten Station (B), und Modifizieren eines Sweet-Spot eines von der zweiten Station (B) wiedergegebenen Audiosignals auf der Basis des Orts des Zuhörers.

12. Das Verfahren nach einem der Ansprüche 1 bis 11, weiterhin aufweisend
Identifizieren eines Zuhörers der zweiten Station basierend auf einem Bild und einer Stimme des Zuhörers unter Verwendung eines Spracherkennungsalgorithmus und/oder Gesichtserkennungsalgorithmus.

13. Das Verfahren nach einem der Ansprüche 1 bis 12, wobei eine Vielzahl
von Kameras (3) an der ersten Station (A) zur gleichzeitigen Aufnahme einer Mehrzahl von Videosignalen verwendet wird.

14. Das Verfahren nach Anspruch 13, wobei der Ort auf der Basis der Vielzahl von Videosignalen bestimmt wird.

15. Das Verfahren nach einem der Ansprüche 13 oder 14, wobei das an der zweiten Station (B) wiedergegebene Videosignal ein von der Vielzahl von Videosignalen verarbeitetes virtuelles Videobild aufweist, so dass die Parallaxe zwischen der Kamera (3) und dem Bildschrim (10) ausgeglichen wird und so dass der Auge-zu-Auge Kontakt zwischen dem Teilnehmern an beiden Stationen ermöglicht wird.

16. Das Verfahren nach Anspruch 15, aufweisend den Schritt des Ersetzens
eines Hintergrunds in dem virtuellen Bild durch einen vordefinierten Hintergrund.

17. Das Verfahren nach einem der Ansprüche 1 bis 16, weiterhin aufweisend
einen Kalibrierungsschritt, während dem Parameter der ersten Station (A), die von dem Ort von Microphonen (4) und/oder Lautsprechern (2) und/oder Kameras (3) abhängen, bestimmt, gespeichert und für die Verbesserung der Kohärenz zwischen dem Audiosignal und dem Videosignal verwendet werden.

18. Das Verfahren nach Anspruch 17, wobei mindestens einige der Parameter zu der zweiten Station (B) übermittelt werden.

19. Eine Vorrichtung aufweisend:

ein Fernsehset (1) als Bildschirm;
ein Lautsprecherset (2);
ein oder mehrere Microphone (4), welche frei um das Fernsehset arrangierbar sind;
eine oder mehrere Kameras (3), welche frei um das Fernsehset arrangierbar sind;
eine Einrichtung (14), welche in einem einzigen Gehäuse Video und Audioverarbeitungsmittel und eine Breitbandinternetzugangskarte aufweist, mit einer Vielzahl an Schnittstellen für das Fernsehset, die Kameras, die Mikrophone und einen Verstärker;
wobei die Verarbeitungsmittel zum Erhalten eines virtuellen Orts einer Audioquelle und zur Manipulierung des Audiosignals, so dass der Eindruck gewonnen wird, dass ein Audiosignal von dem virtuellen Ort stammt, ausgebildet sind;
wobei die Verarbeitungsmittel weiter zum Manipulieren des Audiosignals ausgebildet sind, so dass eine Breite des Audiosignals automatisch und dynamisch vergrössert werden, wenn ein dargestelltes Bild vergrössert wird oder wenn eine Grösse eines dargestellten sprechenden Teilnehmers vergrössert wird.

## Revendications

1. Une méthode pour faire coïncider des signaux audio et vidéo pendant une vidéoconférence entre des participants situés à plusieurs stations, comprenant les étapes:

recevoir à une seconde station à distance (B) des signaux vidéo et audio qui sont transmis de la première station (A) à la seconde station (B) par un réseau de télécommunication (6);
manipuler le signal audio dans ladite seconde station (B), de manière à donner l'impression que la voix de chaque participant parlant trouve son origine depuis la localisation virtuelle de ce participant sur ou autour d'un écran (10);
comprenant de plus la manipulation de ce signal audio dans ladite seconde station (B), de manière à augmenter automatiquement et dynamiquement la largeur du signal audio, lorsque l'image projetée est agrandie ou lorsque la taille d'affichage d'un participant parlant est agrandie.

2. La méthode selon la revendication 1, selon laquelle l'adaptation de la largeur du signal audio comprend au moins l'une des suivantes:

a) l'ajustement de l'amplitude des signaux audio produits par différents haut-parleurs (2) à ladite seconde station (B); et/ou
b) l'ajustement des retards entre les signaux audio produits par différents haut-parleurs (2) à ladite seconde station (B); et/ou
c) l'ajustement de l'amplitude des signaux audio qui sont communs entre les différents canaux à ladite seconde station (B).

3. La méthode selon l'une des revendications 1 ou 2, selon laquelle la largeur est adaptée automatiquement dans le cas d'une modification du focus du signal vidéo.

4. La méthode selon l'une des revendications 1 à 3, selon laquelle ladite largeur et ladite localisation sont les deux automatiquement adaptées lorsque l'image affichée à ladite seconde station (B) est agrandie.

5. La méthode selon la revendication 4, selon laquelle ladite largeur et ladite localisation sont les deux automatiquement adaptées lorsque l'image affichée à ladite seconde station (B) est simultanément déplacée et agrandie.

6. La méthode selon l'une des revendications 4 ou 5, comprenant:

extraction de paramètres de premier plan et d'arrière-plan de l'image vidéo;
détection de modifications de taille et de position de paramètres de premier plan;
détection de modifications de taille et de position de paramètres d'arrière-plan;
adaptation automatique des paramètres de manipulation du signal audio lorsqu'une modification de taille ou de position des paramètres d'arrière-plan a été détectée, et maintien des paramètres de manipulation lorsqu'une modification de taille ou de position ne concerne que les paramètres de premier plan.

7. La méthode selon la revendication 6, selon laquelle un réalignement desdits paramètres de manipulation est effectué en continu ou en réponse à une modification de la taille ou de la position des paramètres de premier plan, pour aligner ces paramètres de premier plan aux sources audio correspondantes.

8. La méthode selon l'une des revendications 1 à 7, comprenant la détermination de l'azimut et de l'élévation dudit participant parlant (7), et la manipulation du signal audio dans la seconde station (B), de façon à adapter dynamiquement l'azimut, l'élévation et la largeur du signal audio au signal vidéo.

9. La méthode selon l'une des revendications 1 à 8, comprenant la détermination de la distance jusqu'audit participant parlant (7), et la manipulation des échos dans ledit signal audio dans ladite seconde station (B), de façon à adapter dynamiquement la distance entre ladite localisation virtuelle et un auditeur à ladite seconde station.

10. La méthode selon l'une des revendications 1 à 9, selon laquelle la localisation d'un participant parlant (7) en-dehors de l'image vidéo reproduite est déterminée, et selon laquelle la manipulation du signal audio dans ladite seconde station (B) est modifiée de manière à donner l'impression que la voix dudit participant parlant a pour origine une localisation en-dehors de l'image.

11. La méthode selon l'une des revendications 1 à 10, comprenant de plus la localisation d'un auditeur à ladite seconde station (B),et la modification d'un Sweet-Spot du signal audio reproduit à ladite seconde station (B) basée sur la localisation dudit auditeur.

12. La méthode selon l'une des revendications 1 à 11, comprenant de plus d'identification d'un auditeur à ladite seconde station basée sur une image et une voix dudit auditeur en utilisant des algorithmes de reconnaissance vocale et/ou des algorithmes de reconnaissance faciale.

13. La méthode selon l'une des revendications 1 à 12, selon laquelle plusieurs caméras (3) sont utilisées à ladite première station (A) pour l'enregistrement simultané de plusieurs signaux vidéo.

14. La méthode selon la revendication 13, selon laquelle ladite localisation est déterminée sur la base desdits plusieurs signaux vidéo.

15. La méthode selon l'une des revendications 13 ou 14, selon laquelle le signal vidéo reproduit à ladite seconde station (B) comprend une image vidéo virtuelle produite par lesdits plusieurs signaux vidéo, de façon à compenser la parallaxe entre lesdites caméras (3) et un écran (10) et pour permettre le contact « les yeux dans les yeux » entre participants aux deux stations.

16. La méthode selon la revendication 15, comprenant l'étape de remplacement d'un arrière-plan dans ladite image virtuelle par un arrière-plan prédéfini.

17. La méthode selon l'une des revendications 1 à 16, comprenant de plus une étape de calibration durant laquelle les paramètres de ladite première station (A) qui dépendent de la localisation des microphones (4) et/ou haut-parleurs (2) et/ou caméras (3) sont établis, sauvegardés et utilisés pour améliorer la cohérence entre les signaux audio et vidéo.

18. La méthode selon la revendication 17, selon laquelle au moins certains desdits paramètres sont transmis à ladite seconde station (B).

19. Un dispositif comprenant:

   un set de télévision (1) comme écran;
   un set de haut-parleurs (2);
   un ou plusieurs microphones (4) disposés de manière libre autour du set de télévision;
une ou plusieurs caméras (3) disposées de manière libre autour du set de télévision;
un équipement (14) intégrant dans une seule enceinte des moyens de traitement vidéo et audio et une carte d'accès internet à haut débit avec plusieurs interfaces pour ledit set de télévision, lesdites caméras, lesdits microphones et ledit amplificateur;
selon lequel lesdits moyens de traitement sont disposés pour obtenir une localisation virtuelle d'une source audio et pour manipuler des signaux audio de manière à donner l'impression qu'un signal audio trouve son origine dans ladite localisation virtuelle;
selon lequel lesdits moyens de traitement sont de plus disposés pour manipuler ledit signal audio, de manière à augmenter automatiquement et dynamiquement la largeur du signal audio, lorsque l'image projetée est agrandie ou lorsque la taille d'affichage d'un participant par-lant est agrandie.

Fig. 1

2L'  2L  1  3.1  2R  2R'

10

4L  4C  3.2  14  4R

2C  2sub

A

EP 2 352 290 B1

15

Fig. 2

Fig.3A

Fig.3B

EP 2 352 290 B1

Fig.4A

Fig.4B

Fig.5A

Fig.5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009042530 A1
- WO 02079792 A2
- US 6593956 B1
- US 20060104458 A1
- US 5335011 A